Europäisches Patentamt

European Patent Office

Office européen des brevets

(11) Veröffentlichungsnummer: **0 299 146**

**A2**

(12) # EUROPÄISCHE PATENTANMELDUNG

(21) Anmeldenummer: **88105447.2**

(51) Int. Cl.⁴: **A47J 31/54**

(22) Anmeldetag: **06.04.88**

(30) Priorität: **11.07.87 DE 3723016**

(43) Veröffentlichungstag der Anmeldung:
**18.01.89 Patentblatt 89/03**

(84) Benannte Vertragsstaaten:
**CH FR GB IT LI NL SE**

(71) Anmelder: **ROBERT KRUPS STIFTUNG & CO. KG.**
**Heresbachstrasse 29**
**D-5650 Solingen 19(DE)**

(72) Erfinder: **Hoffmann, Erich**
**Katterbachstrasse 38**
**D-5060 Bergisch-Gladbach(DE)**

(74) Vertreter: **Buse, Karl Georg, Dipl.-Phys. et al**
**Patentanwälte Dipl.-Phys. Buse Dipl.-Phys.**
**Mentzel Dipl.-Ing. Ludewig Unterdörnen 114**
**D-5600 Wuppertal 2(DE)**

(54) **Elektrisch betriebenes Gerät zum Zubereiten von Heissgetränken, wie Kaffee, Tee od.dgl.**

(57) Es handelt sich um ein elektrisch betriebenes Gerät zum Zubereiten von Heißgetränken, wie Kaffee, Tee od.dgl. dessen Gehäuse eine Frischwasserbehälter aufnimmt. Der Auslauf des Frischwasserbehälters ist mit einem Durchlauferhitzer verbunden, aus dem das erhitzte Wasser in ein Steigrohr gelangt. Der Auslauf des Steigrohres liegt über einem Filterbehälter, der mittels einer Filtertüte od.dgl. das Kaffeemehl aufnimmt. Unter dem Auslaß des Filterbehälters ist ein Auffangbehälter angeordnet, welcher auf einem Gehäuseteil, wie einem Aufstellfuß, ruht. Als Heizung des Durchlauferhitzers wird eine Dickschichtheizung benutzt (PTC-Heizelement). Die Dickschichtleiterbahnen der Dickschichtheizung werden aus pastenförmigen Werkstoff gebildet und in einer unterschiedlichen Anzahl und Anordnung auf der einen Seite des Durchlauferhitzers angeordnet. Die Anordnung kann unmittelbar auf dem Durchlauferhitzer erfolgen, wenn dieser einstückig aus einem elektrisch isolierenden Werkstoff, beispielsweise aus Keramik oder Kunststoff gefertigt ist. Daneben ist aber auch die Verwendung eines metallischen Grundkörpers, beispielsweise aus Aluminium, möglich, der dann einen Tragkörper aus elektrisch isolierendem Werkstoff aufnimmt, auf dem dann die Dickschichtleiterbahnen angeordnet sind.

**Elektrisch betriebenes Gerät zum Zubereiten von Heißgetränken , wie Kaffee, Tee od.dgl.**

Die Erfindung bezieht sich auf ein elektrisch betriebenes Gerät zum Zubereiten von Heißetränken, wie Kaffee, Tee od.dgl., dessen Gehäuse einen Frischwasserbehälter aufnimmt, dessen Auslauf mit einem Durchlauferhitzer verbunden ist, aus dem das erhitzte Wasser in ein Steigrohr gelangt, dessen Auslauf über einem Filterbehälter angeordnet ist, der das zu behandelnde Gut, wie Kaffeemehl od.dgl. aufnimmt und unter dem ein Auffangbehälter angeordnet ist, welcher auf einem Gehäuseteil, wie einem Aufstellfuß, ruht.

Derartige elektrisch betriebene Geräte zum Zubereiten von Heißgetränken, wie Kaffee, Tee od.dgl., bei denen ein sogenannter Durchlauferhitzer benutzt wird, sind in zahlreichen Ausführungsformen bekannt. Die bekannten Durchlauferhitzer sind im wesentlichen aus einem an einem Tragkörper befestigten Heizrohr gebildet. Dieses weist eine in einem Metallrohr angeordnete Heizwendel auf, wobei in der Regel eine Einbettung in Magnesiumoxyd-Pulver erfolgt. Neben dem Heizrohr ist ein weiteres Rohr zum Führen des zu erhitzenden Wassers angeordnet. Derartige Durchlaufer hitzer haben unterschiedliche Gestalt und unterschiedliche Anordnung ihrer Einzelteile. In der Regel haben sie eine in Draufsicht gesehen U-förmige Ausführung, was sowohl für das Heizrohr als auch für das Wasserrohr gilt. Dabei dient der eine Schenkel des Wasserrohres zum Einlaß des Frischwassers und der andere zum Auslaß des erhitzten Wassers. Man hat zahlreiche Versuche unternommen, um einen guten Wärmeübergang zwischen den elektrisch betriebenen Heizrohren und den Wasserrohren herzustellen. Außerdem sind zahlreiche weitere Versuche unternommen wirden, um die beim Betrieb dieser Geräte entstehenden Geräusche zu beseitigen, zumindest aber zu dämpfen.

Die bisher bekannten Durchlauferhitzer dieser Art sind verhältnismäßig teuer in ihrer Herstellung und arbeiten darüber hinaus mit einem schlechten Wirkungsgrad. Ferner sind beim bestimmungsgemäßen Gebrauch von elektrisch betriebenen Haushaltgeräten, wie Kaffee-oder Teeautomaten, bei denen derartige Durchlauferhitzer eingesetzt werden, noch zusätzliche Einrichtungen erforderlich, beispielsweise Thermostate oder aber auch Schmelzsicherungen. Bei vielen bekannten Geräten wird darüber hinaus auch noch eine Diode benutzt, beispielsweise bei solchen Ausführungsformen, bei denen eine Umschaltmöglichkeit besteht, derart, daß man den Kaffeeautomat wahlweise zum Herstellen von geringen Kaffeemengen als auch von größeren Kaffeemengen benutzen kann. Man verwendet hierbei die Diode, um eine Anpassung der elektrischen Energie an die herzustellende Kaffeemenge zu erzielen. Alle diese zusätzlichen Einrichtungen, wie Thermostate, Dioden oder Schmelzsicherungen verteuern das Haushaltgerät nicht unerheblich. Darüber hinaus stellen sie auch einen erheblichen Störfaktor dar und vergrößern die Möglichkeiten von Defekten des Kaffeeautomaten.

Der Erfindung liegt die Aufgabe zugrunde, elektrisch betriebene Geräte zum Zubereiten von Heißgetränken, wie Kaffee, Tee od.dgl. der eingangs näher gekennzeichneten Art weiter zu verbessern, insbesondere derart, daß sie einfach in ihrem Aufbau sind und daher in wirtschaftlicher Weise hergestellt werden können. dabei soll eine Heizung Benutzung finden, die eine geringe Wärmekapazität aufweist und die daher unverzüglich auf Mengenänderungen beim bestimmungsgemäßen Betrieb reagiert.

Zur Lösung dieser Aufgabe wird erfindungsgemäß vorgeschlagen, die Heizung des Durchlauferhitzers als Dickschichtheizung auszubilden, deren aus pastenförmigem Werkstoff gebildete Dickschichtleiterbahn wenigstens eine Seite des Durchlauferhitzers erfaßt und deren eines Ende mit einem Schalter und deren anderes Ende mit einem Relais in Verbindung steht. Die erfindungsgemäß ausgebildete Ausführungsform eines elektrisch betriebenen Gerätes zum Zubereiten von Heißgetränken, wie Kaffee, Tee od.dgl. hat gegenüber dem Bekannten erhebliche Vorteile. So kann der Durchlauferhitzer wesentlich wirtschaftlicher hergestellt werden als bei den bisher bekannten Ausführungsformen, weil er nur aus wenigen Einzelteilen besteht, die darüber hinaus jedes für sich wirtschaftlich hergestellt werden können. Dies gilt insbesondere dann, wenn bei der bevorzugten Ausführungsform der Erfindung ein selbstregelndes PTC-Heizelement eingesetzt wird, also ein Heizelement mit einem positiven Temperaturkoeffizienten. Die bisher beim Betrieb derartiger Kaffee- oder Teeautomaten benötigten Einrichtungen, wie Thermostat, Schmelzsicherung oder Diode kommen ganz in Fortfall, weil die Funktionen dieser Einrichtungen von den Teilen des erfindungsgemäßen Durchlauferhitzers selbst übernommen werden. Daher ist der Einsatz zusätzlicher Einrichtungen entbehrlich.

Der Durchlauferhitzer des erfindungsgemäßen Kaffeeoder Teeautomaten kann unterschiedlich gestaltet sein. Nach einem ersten Vorschlag der Erfindung ist der Durchlauferhitzer ein metallischer Grundkörper mit einer durchgehenden, vorzugsweise in Draufsicht gesehen U-förmi gen Bohrung, deren eines Ende den Einlaß und deren anderes End den Auslaß bildet. Die eine Seite eines solchen metallischen Grundkörpers, der beispielsweise aus Aluminium gefertigt sein kann, dient zum Anbringen eines plattenförmigen Tragkörpers aus Keramik, Kunststoff od.dgl., der seinerseits wenigstens eine Dickschichtleiterbahn trägt. Ein solcher aus einem elektrisch isolierenden Werkstoff gefertigter Tragkörper mit darauf angebrachter Dickschichtleiterbahn kann bei Bedarf auch an mehreren Seiten des Grundkörpers angebracht werden. Selbstverständlich ist es aber auch möglich, die einzelnen Tragkörper zu einer einstückigen Baueinheit zusammenzufassen, die beispielsweise die Oberseite und die benachbarten Seitenwandungen erfaßt, so daß nur die der Oberseite gegenüberliegende Unterseite zum Anbringen des Tragkörpers an dem metallischen Grundkörper freibleibt. Zur Herstellung dieser Verbindung können in der Technik bekannte Verbindungen herangezogen werden. Erwähnt sei beispielsweise ein Verkleben.

Zu einer ganz besonders wirtschaftlichen Lösung kommt man dann, wenn der Durchlauferhitzer ein einstückiger Körper aus einem isolierenden Werkstoff, wie Keramik oder Kunststoff ist, den eine Bohrung mit Ein- und Auslaß durchsetzt und auf dessen wenigstens einer Wandung unmittelbar eine Dickschichtleiterbahn aufgebracht ist. Diese Ausführungsform des Durchlauferhitzers ist also einstückig gehalten. Dies bedeutet, daß auf die getrennte Herstellung eines Tragkörpers mit Dickschichtleiterbahn ebenso verzichtet wird wie auf die nachträgliche Verbindung eines solchen Tragkörpers mit dem metallischen Grundkörper. Aus herstellungstechnischen Gründen empfiehlt es sich dabei, die Bohrung in Draufsicht gesehen etwa V-förmig zu gestalten, wobei der Ein- und Auslaß einer solchen Bohrung außerhalb des eigentlichen Keramikkörpers liegen können.

Man kann aber auch in Abwandlung dieser Ausführungsform die Bohrung des Durchlauferhitzers aus zwei Teilbohrungen zusammensetzen, die winklig zueinander stehen, derart, daß sie vorzugsweise in der Nähe der einen Stirnwand des Durchlauferhitzers zusammenlaufen.

Hinsichtlich der Anzahl und der Anordnung der zu benutzenden Dickschichtleiterbahnen gibt es zahlreiche Variationsmöglichkeiten, d.h. der Dickschichtheizer kann eine Mehrzahl von vorzugsweise unterschiedlich gestalteten und beschaffenen Dickschichtleiterbahnen aufweisen, wobei diese wahlweise einzeln oder gruppenweise benutzt werden können. Die Dickschichtleiterbahnen können in an sich bekannter Weise hergestellt werden, beispielsweise können sie derart erzeugt werden, wie es in der EP-Patentanmeldung o 158 779 im einzelnen angegeben ist. In dieser Druckschrift finden sich nicht nur Hinweise auf die zu benutzenden Werkstoffe sondern auch auf die Verfahren, wie die Dickschichtleiterbahnen auf dem jeweiligen Tragkörper angebracht sind.

Die ein und demselben Dickschichtheizer zugeordneten Dickschichtleiterbahnen können - wie dargelegt - unterschiedlich gestaltet sein. Dies gilt sowohl hinsichtlich ihrer räumlichen Anordnung als auch hinsichtlich ihrer Breiten- und Längenabmessungen. Man kann dabei ein und demselben Grundkörper unterschiedlich lange und unterschiedlich breite Dickschichtleiterbahnen zuordnen, wobei man es dann in Abhängigkeit von dem jeweiligen Verwendungs- oder Einsatzzweck in der Hand hat, die Dickschichtleiterbahnen einzeln oder gruppenweise zu benutzen.

In den Figuren der Zeichnungen sind mehrere Ausführungsbeispiele eines erfindungsgemäßen elektrisch betriebenen Gerätes zum Zubereiten von Heißgetränken, wie Kaffee, Tee od.dgl. sowie der dazugehörigen Einzelteile wiedergegeben. Es zeigen:

Fig. 1 in Seitenansicht, teilweise im Schnitt, ein erfindungsgemäß ausgebildetes, elektrisch betriebenes Gerät zum Zubereiten von Kaffee, einen sogenannten Kaffeeautomaten,

Fig. 2 in Seitenansicht einen Durchlauferhitzer, wie er bei dem Kaffeeautomaten nach der Fig. 1 zum Einsatz kommt,

Fig. 3 einen Schnitt durch den Durchlauferhitzer gemäß der Fig. 2 entlang der Linie III-III,

Fig. 4 eine Draufsicht auf den Durchlauferhitzer gemäß der Fig. 2 der Zeichnung;

Fig. 5 einen Schnitt durch den Durchlauferhitzer gemäß der Fig. 4 der Zeichnung entlang der Linie V-V,

Fig. 6 in schaubildlicher und vergrößerter Darstellung eine weitere Ausführungsform eines Durchlauferhitzers mit den zugehörigen Teilen, teilweise weggebrochen,

Fig. 7 einen Schnitt durch eine dritte Ausführungsform eines erfindungsgemäßen Durchlauferhitzers und

Fig. 8 eine Stirnansicht des Durchlauferhitzers gemäß der Fig. 7 der Zeichnung.

Es sei zunächst erwähnt, daß in den Figuren der Zeichnungen nur diejenigen Teile eines elektrisch betriebenen Gerätes zum Zubereiten von Heißgetränken, wie Kaffee, Tee od.dgl. dargestellt sind, die für das Verständnis der Erfindung Bedeutung haben. So fehlen insbesondere die elektrischen Anschlüsse, die zugehörigen Schalt- und Steuereinrichtungen und die Verbindungsleitungen dieser Teile untereinander. Alle in den Figuren der Zeichnungen nicht dargestellten Teile können einen an sich bekannten Aufbau haben und in ebenfalls an sich bekannter Weise miteinander verbunden werden.

Dem Ausführungsbeispiel ist ein in seinem Aufbau grundsätzlich bekanntes elektrisch betriebenes Gerät zum Zubereiten von Heißgetränken, wie Kaffee, zugrundegelegt, welches generell mit 10 bezeichnet ist und kurz Kaffeeautomat genannt wird. Der Kaffeeautomat 10 hat ein Gehäuse 11 aus einem elektrisch isolierendem Werkstoff mit einem im wesentlichen L-förmigen Querschnitt. Der längere der beiden Schenkel eines solchen L's ist dabei als hohler Aufstellfuß 12 ausgebildet. Dessen Unterseite dient zugleich als Stellfläche für den Kaffeeautomaten 10. Auf der oberen Stirnseite des nicht näher bezeichneten kürzeren Schenkels des Gehäuses 11 ist ein Frischwasserbehälter 13 angeordnet, der nach unten hin durch einen Boden 14 verschlossen ist. Auf der Unterseite des Bodens sind Haltemittel 15 vorgesehen, die zum lösbaren Verbinden des Frischwasserbehälters 13 mit dem Gehäuse 11 dienen. Von den tatsächlich vorhandenen mehreren Haltemitteln 15 ist der Einfachheit halber nur ein einziges dargestellt.

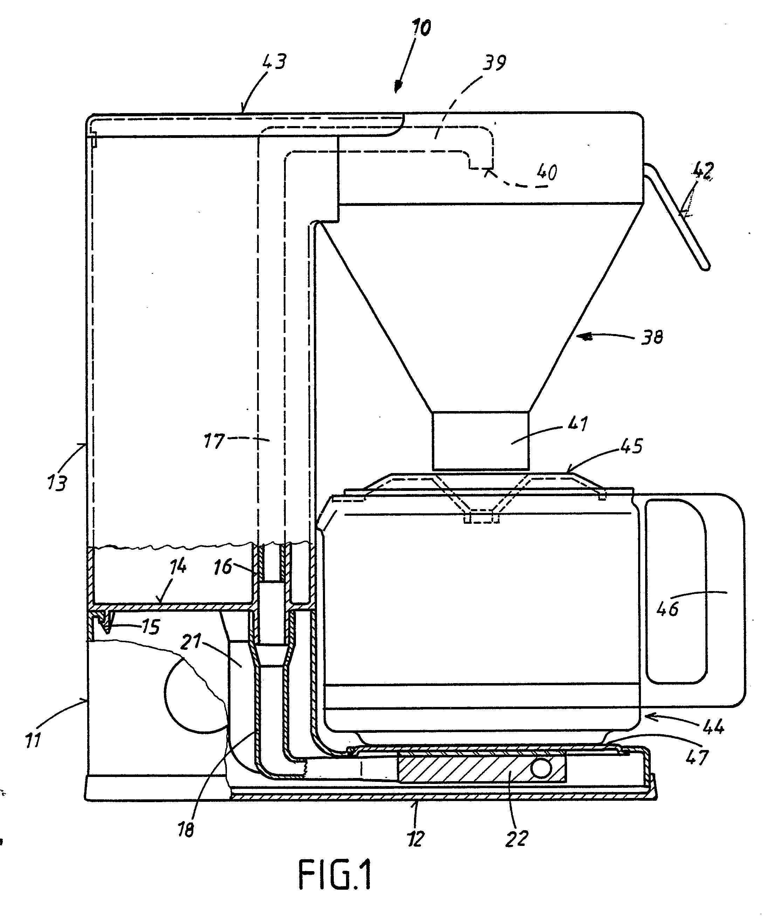

Im Bereich des Bodens 14 sind Ferner Durchführungstutzen 16 vorhanden, von denen in der Fig. 1 der eine im Schnitt dargestellt ist. Der in der Fig. 1 sichtbare Durchführungsstutzen 16 des Bodens 14 des Frischwasserbehälters 13 ist in seinem oberen, also im Inneren des Frischwasserbehälters 13 liegenden Bereich mit einem Steigrohr 17 verbunden, welches in seinem oberen Bereich in ein Querrohr 39 übergeht, wobei dieses Querrohr 39 einen nach unten zeigenden Auslaß 40 aufweist. Auf der gegenüberliegenden, nämlich außenliegenden Seite ist der Durchführungsstutzen 16 mit einem Verbinder 18 versehen, dessen anderes Ende an den Auslaß eines generell mit 22 bezeichneten Durchlauferhitzers angeschlossen ist. Der Verbinder 18 wird zweckmäßig aus einem elastischen Werkstoff hergestellt, so daß er dichtend sowohl mit dem Durchführungsstutzen als auch mit dem Auslaß verbunden werden kann.

Wie am besten aus der Fig. 6 der Zeichnung ersichtlich, weist der Durchlauferhitzer 22 auf seiner einen Seite und zwar im Ausführungsbeispiel auf der rückwärtigen Seitenwand, einen Einlaß 20 auf, der auf seiner einen Seite über einen Verbinder 21 mit dem Frischwasserbehälter 13 verbunden ist. Dies Verbinden geschieht wiederum unter Verwendung eines Durchführungsstutzens 16. Auf der gegenüberliegenden anderen Seite steht der Einlaß 20 mit einer durchlaufenden Bohrung 32 des Durchlauferhitzers 22 in Verbindung. Das gegenüberliegende andere Ende dieser durchlaufenden Bohrung 32 steht in Wirkverbindung mit dem Auslaß 19, der - wie erwähnt - über einen Verbinder 18 mit dem Durchführungsstutzen 16 gemäß der Fig. 1 der Zeichnung verbunden ist, wobei sich auf der gegenüberliegenden anderen Seite des Durchführungsstutzens 16 das Steigrohr 17 befindet. In der Fig. 6 der Zeichnung ist mit A die Richtung des einströmenden kalten Wassers wiedergegeben, welches aus dem Frischwasserbehälter 13 kommt. Mit dem Pfeil B ist dagegen die Strömungsrichtung des im Durchlauferhitzer erwärmten Wassers wiedergegeben.

Nachzutragen bleibt noch, daß der Frischwasserbehälter und auch ein Teil des Filtergefäßes durch eine Abdeckung 43 verschließbar ist. Durch Entfernen dieser Abdeckung wird die obere Öffnung des Frischwasserbehälters 13 zugänglich.

Unterhalb des Auslasses 40 des Querrohres 39 ist ein an sich bekannter Filterträger 38 angeordnet, der in seiner kegelig gehaltenen Aufnahme in bekannter Weise eine Filtertüte aufnimmt, die ihrerseits mit Kaffeemehl in der vom Benutzer gewünschten Menge beschickt wird. Der Filterträger 38 hat in seinem oberen Bereich einen Griff 42 und an seinem unteren Ende einen Endstutzen 41, der hohl gehalten ist, so daß das fertig zubereitete Getränk nach unten abfließen kann. Es gelangt durch eine nicht näher bezeichnete Öffnung eines Deckels 45 in einen generell mit 44 bezeichneten Auffangbehälter, der vorzugsweise aus einem durchsichtigen, glasklaren Werkstoff gefertigt ist und der einen Handgriff 46 aufweist und mit seinem Fuß auf einer Warmhalte- bzw. Aufstellplatte 47 ruht. Unterhalb dieser Aufstellplatte, die zweckmäßig unter Zwischenschaltung einer Silikondichtung mit dem Gehäusefuß 12 verbunden ist, befindet sich der schon erwähnte Durchlauferhitzer 22.

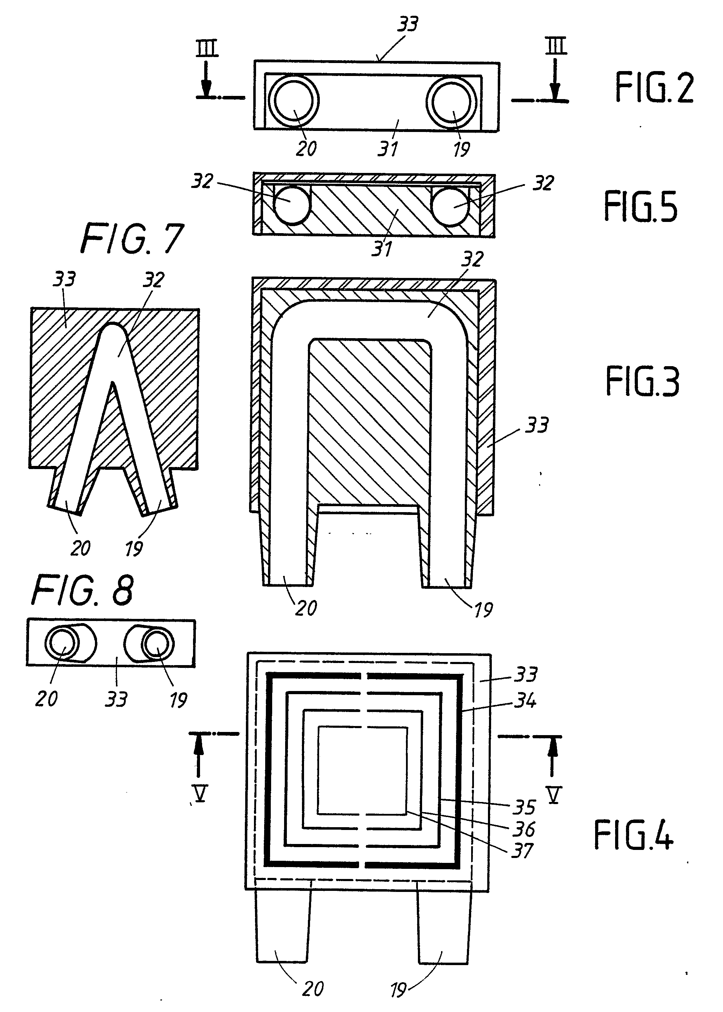

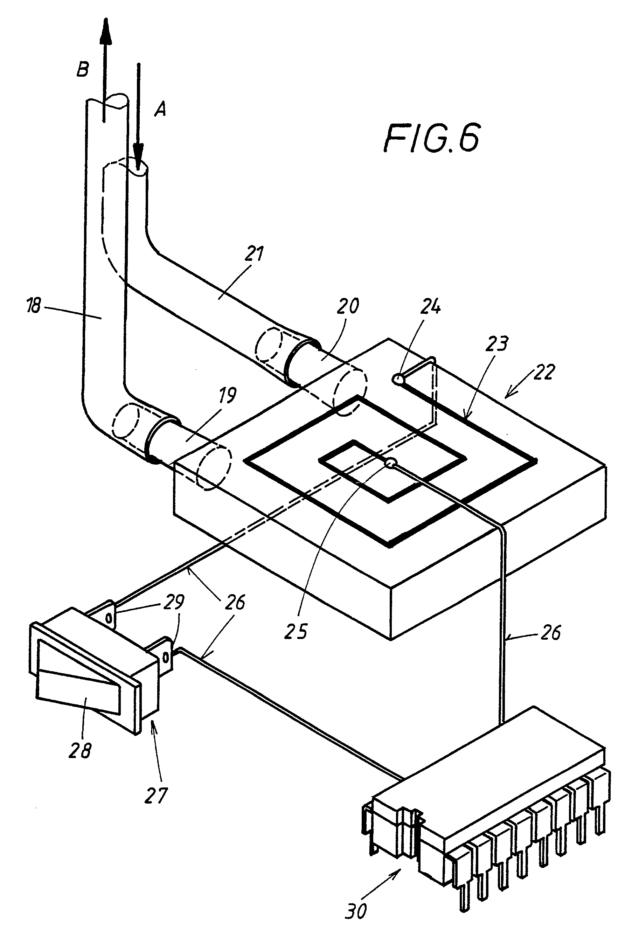

In den Fig. 2 bis 5 der Zeichnung ist eine erste Ausführungsform des erfindungsgemäßen Durchlauferhitzers angegeben. Zu dieser Ausführungsform des Durchlauferhitzers 22 gehört ein etwa quaderförmiger Grundkörper 31 aus einem metallischen Werkstoff, beispielsweise aus Aluminium. Der Grundkörper 31 wird durchsetzt von einer durchlaufenden Bohrung 32, die, wie die Fig. 3 am besten erkennen läßt, eine U-förmige Gestaltung aufweist. Die beiden Schenkel des U's sowie der Steg desselben haben dagegen im Querschnitt gesehen kreisrunde Gestalt. Der Grundkörper 31 hat auf seiner einen und zwar in der Fig. 3 unteren Stirnwand Verlängerungen, die einmal als Auslaß 19 und zum anderen als Einlaß 20 gestaltet sind. An den Ein-und Auslaß werden die Verbinder 18 bzw. 21 in der in Fig. 1 wiedergegebenen Weise angeschlossen.

Der Grundkörper 31 ist im Ausführungsbeispiel nach den Fig. 2 bis 5 der Zeichnung an mehreren Wandungen und zwar im Bereich der Oberseite und an den Seitenwandungen von einem generell mit 33 bezeichneten Tragkörper umgeben, der aus einem elektrisch isolierenden Werkstoff, vorzugsweise aus Keramik oder einem Kunststoff hergestellt ist. Wenigstens auf einer Seite des Tragkörpers 33 in der Fig. 4 auf der Oberseite-ist eine Mehrzahl von Dickschichtleiterbahnen angeordnet. Im gewählten Ausführungsbeispiel sind es die Dickschichtleiterbahnen 34, 35, 36 und 37. Diese Dickschichtleiterbahnen 34 bis 37 sind gruppenweise angeordnet. Die beiden Gruppen sind untereinander gleichgestaltet, jedoch spiegelbildlich. Sie sind jeweils durch einen nicht näher bezeichneten Spalt voneinander getrennt. Die Dickschichtleiterbahnen 34 bis 37 können wahlweise einzeln oder auch gruppenweise benutzt werden, je nach den Wünschen des Herstellers des Kaffeeautomaten 10. Im gewählten Ausführungsbeispiel ist jede Dickschichtleiterbahn U-förmig gestaltet, wobei jedoch eine Ineinanderschachtelung erfolgt. Auf diese Weise haben die Dickschichtleiterbahnen 34 bis 37 unterschiedliche Länge. Darüber hinaus sind sie aber auch unterschiedlich breit gehalten, derart, daß die außenliegende Dickschichtleiterbahn 34 die größte und die innenliegende Dickschichtleiterbahn 37 die kleinste Breite aufweist. Der Widerstandswert der Dickschichtleiterbahnen 34 bis 37 ist umgekehrt proportional zur Breite der Bahn.

Bei der Ausführungsform des Durchlauferhitzers 22 nach den Fig. 2 bis 5 der Zeichnung ist darauf verzichtet, die Seitenwandungen mit Dickschichtleiterbahnen auszurüsten. Dies könnte bei Bedarf geschehen.

In den Fig. 7 und 8 der Zeichnung ist eine zweite Ausführungsform des Durchlauferhitzers 22 wiedergegeben, die einstückig gehalten ist, d.h. es wird auf einen metallischen Grundkörper 31, beispielsweise auf einen Aluminiumkörper ganz verzichtet. Stattdessen wird ein quaderförmiger Isolierkörper 33 beispielsweise aus Keramik hergestellt, der weiterum von einer durchlaufenden Bohrung 32 durchsetzt ist. Diese hat - wie die Fig. 7 der Zeichnung am besten erkennen läßt - in Draufsicht gesehen V-förmige Gestaltung, wobei die beiden winklig zueinander stehenden Schenkel des V's im Querschnitt kreisrund gehalten sind. Der Isolierkörper (Tragkörper) 33 hat an seiner einen Stirnwand liegend wiederum den Einlaß 20 bzw. den Auslaß 19, so daß auch der Durchlauferhitzer nach den Fig. 7 und 8 in der in Fig. 1 dargestellten Art und Weise benutzt werden kann.

In der Fig. 6 der Zeichnung ist schließlich eine dritte Ausführungsform des Durchlauferhitzers 22 wiedergegeben und darüber hinaus sind die Einzelteile dargestellt, mit denen ein solcher Durchlauferhitzer zusammenwirkt. Grundsätzlich kann es sich bei dem Durchlauferhitzer 22 nach der Fig. 6 der Zeichnung sowohl um eine solche Ausführungsform handeln, die zweistückig gehalten ist als auch um eine einstückige Ausführungsform. In beiden Fällen ist auf der Oberseite des Durchlauferhitzers 22 eine Dickschichtleiterbahn 23 angebracht, deren I. Ende mit einem Schalter 27 in Verbindung steht und deren II. Ende über eine Verbindungsleitung 26 mit einem Relais 30 verbunden ist. Weitere Verbindungsleitungen, die jeweils alle mit 26 bezeichnet sind, befinden sich zwischen dem Schalter 27 und dem Relais 30 und zwischen dem Schalter 27 und dem I. Ende 24 der Dickschichtleiterbahn 23. Bei dem Schalter 27 kann es sich um einen im Handel erhältlichen Schalter handeln, der auf seiner Rückseite Anschlußkontakte 29 aufweist, an denen die zugekehrten Enden der Anschlußleitungen 26 in bekannter Weise festgelegt, beispielsweise angelötet werden können. Der Schalter 27 hat einen Betätiger 28, der im dargestellten Ausführungsbeispiel als eirfacher Kippschalter ausgebildet ist, der wahlweise vom Benutzer in eine Einschalt- und Ausschaltstellung überführt werden kann. Bei dem Relais 30 nach der Fig. 6 der Zeichnung kann es sich um ein solches handeln, welches von der Firma MOTOROLA unter der Typen-Bezeichnung CMOS auf den Markt gebracht wird.

Bei der Heizung des Durchlauferhitzers 22 handelt es sich - wie gesagt - um eine PTC-Heizung. Bei einem Ausführungsbeispiel ist vorgesehen, eine PTC-Heizung von 500 Watt zu benutzen, die unter Einschaltung des Relais 30 acht Minuten lang betrieben wird, dann automatisch auf 30 Watt umschaltet. Die 30-Watt-Leistung genügt, um das in dem Auffangbehälter 44 befindliche Getränk, wie Kaffee, warmzuhalten. Nach einer gewünschten einstellbaren Zeit kann dann die vollständige Abschaltung erfolgen.

Wie bereits erwähnt, ist die dargestellte Ausführung nur eine beispielsweise Verwirklichung der Erfindung und diese nicht darauf beschränkt. Vielmehr sind noch mancherlei andere Ausführungen und Anwendungen möglich. Dies gilt insbesondere für die Ausbildung und Gestalt des Durchlauferhitzers 22 und seiner Einzelteile. Insbesondere ist es möglich, der Durchlaufenden Bohrung des Durchlauferhitzers eine andere Gestalt zu geben. Dies gilt sowohl für die Draufsicht als auch für den Querschnitt. Ferner kann die Anzahl der Dickschichtleiterbahnen sowie ihre Anordnung ihre Dimensionierung abweichend von den dargestellten Ausführungsbeispielen gewählt werden. Und schließlich kann die Erfindung auch bei anderen an sich bekannten Kaffee- oder Teeautomaten eingesetzt werden. Das Relais 30 kann auch für weitere als die angegebenen Zwecke eingesetzt werden.

Bezugszeichenliste:

10 - Kaffeeautomat
11 - Gehäuse (von 10)
12 - Aufstellfuß (von 11)
13 - Frischwasserbehälter
14 - Boden (von 13)
15 - Haltemittel (von 13)
16 - Durchführungstutzen (in 14)

17 - Steigrohr
18 - Verbinder
19 - Auslaß
20 - Einlaß
21 - Verbinder
22 - Durchlauferhitzer
23 - Dickschichtleiterbahn (Fig. 5)
24 - I. Ende (von 23)
25 - II. Ende (von 23)
26 - Verbindungsleitungen
27 - Schalter
28 - Betätiger
29 - Anschlußkontakte
30 - Relais
31 - Grundkörper (von 22)
32 - durchlaufende Bohrung (in 31)
33 - Tragkörper (elektrisch isoliert)
34 - Dickschichtleiterbahn
35 - Dickschichtleiterbahn
36 - Dickschichtleiterbahn
37 - Dickschichtleiterbahn
38 - Filterträger
39 - Querrohr (von 17)
40 - Auslaß (von 39)
41 - Endstutzen (von 38)
42 - Griff
43 - Abdeckung
44 - Auffangbehälter
45 - Deckel (von 44)
46 - Handgriff (von 44)
47 - Aufstellplatte

A - Pfeil für einströmendes Wasser
B - Pfeil für ausströmendes Wasser

**Ansprüche**

1. Elektrisch betriebenes Gerät zum Zubereiten von Heißgetränken, wie Kaffee, Tee od.dgl., dessen Gehäuse einen Frischwasserbehälter aufnimmt, dessen Auslauf mit einem Durchlauferhitzer verbunden ist, aus dem das erhitzte Wasser in ein Steigrohr gelangt, dessen Auslauf über einem Filterbehälter angeordnet ist, der das zu behandelnde Gut, wie Kaffeemehl od.dgl., aufnimmt und unter dem ein Auffangbehälter angeordnet ist, welcher auf einem Gehäuseteil, wie einem Aufstellfuß, ruht, **dadurch gekennzeichnet,** daß die Heizung des Durchlauferhitzers (22) eine Dickschichtheizung ist, deren aus pastenförmigem Werkstoff gebildete Dickschichtleiterbahn (23 bzw. 34-37) wenigstens eine Seite des Durchlauferhitzers (22) erfaßt und deren eines Ende mit einem Schalter (27) und deren anderes Ende mit einem Relais (30) in Verbindung steht.

2. Gerät nach Anspruch 1, dadurch gekennzeichnet, daß der Durchlauferhitzer (22) ein metallischer Grundkörper (31) mit einer durchgehenden, vorzugsweise in Draufsicht gesehen U-förmigen Bohrung (32) ist, deren eines Ende den Einlaß (20) und deren anderes Ende den Auslaß (19) bildet und daß die eine - vorzugsweise die Oberseite - des metallischen Grundkörpers (31) einen plattenförmigen Tragkörper (33) aus Keramik, Kunststoff od.dgl. aufnimmt, der seinerseit wenigstens eine Dickschichtleiterbahn (23) trägt.

3. Gerät nach Anspruch 1 und 2, dadurch gekennzeichnet, daß auch einige der Seitenwandungen des Durchlauferhitzers (22) mit Tragkörpern (33) und darauf angebrachten Dickschichtleiterbahnen (23) versehen sind.

4. Gerät nach Anspruch 1, dadruch gekennzeichnet, daß der Durchlauferhitzer ein einstückiger Körper aus einem isolierenden Werkstoff, wie Keramik oder Kunststoff ist, den eine Bohrung mit Ein- und Auslaß durchsetzt und auf dessen wenigstens einer Wandung unmittelbar eine Dickschichtleiterbahn (23) aufgebracht ist.

5. Gerät nach Anspruch 4, dadurch gekennzeichnet, daß die Bohrung des Durchlauferhitzers aus zwei Teilbohrungen zusammengesetzt ist, die winklig zueinander angeordnet sind, derart, daß sie vorzugsweise in der Nähe der einen Stirnwand des Durchlauferhitzers zusammenlaufen.

6. Gerät nach einem oder mehreren der vorangehenden Ansprüche, dadurch gekennzeichnet, daß der Dickschichtheizer eine Mehrzahl von vorzugsweise unterschiedlich gestalteten und beschaffenen Dickschichtleiterbahnen (34, 35, 36, 37) aufweist, die wahlweise einzeln oder gruppenweise benutzbar sind.

FIG.1

Fa.Robert Krups Stiftung & Co. KG

EP 0 299 146 A2

FIG.2

FIG.5

FIG.7

FIG.3

FIG.8

FIG.4

Fa.Robert Krups Stiftung & Co.KG

FIG.6

B

A

21

18

20

24

23

22

19

25

26

29

26

28

27

26

30

Fa. Robert Krups Stiftung & Co KG